# EUROPEAN PATENT SPECIFICATION

(11) **EP 2 369 657 B1**
(45) Date of publication and mention of the grant of the patent: **24.12.2014**
(21) Application number: 11002402.3
(22) Date of filing: 23.03.2011
(51) Int. Cl.: H01M 2/36, H01M 10/06

(54) **Battery watering system**
Batteriewässerungssystem
Système d'alimentation en eau pour batterie

(30) Priority: 23.03.2010 US 316549 P
(43) Date of publication of application: 28.09.2011
(73) Proprietor: Jones, William E. M., Freeport (BS)
(72) Inventor: Jones, William E.M., Freeport, BS (US)
(74) Representative: Callies, Rainer Michael

(56) References cited:
- EP-A1- 1 647 484
- EP-A1- 1 753 055
- EP-A2- 0 105 197
- US-A- 2 140 432
- US-A- 4 522 896
- US-A- 5 841 355
- US-A1- 2003 102 029
- US-A1- 2003 183 281

## Description

### CROSS-REFERENCE TO RELATED APPLICATIONS

This application claims the benefit of U.S. Provisional Application No. 61/316,549, filed March 23, 2010.

### BACKGROUND OF THE INVENTION

### 1. Field of the Invention

The present invention relates to devices, systems and methods for watering aqueous batteries.

### 2. Description of the Related Art

Aqueous battery cells have positive and negative plates (electrodes) immersed in a liquid electrolyte that includes water, all contained within a cell housing. Such battery cells include lead/acid flooded cells which have an electrolyte of sulphuric acid and water.

Flooded battery cells are in wide use, for example, to power fork lift trucks, power golf carts, store electricity from solar panels, etc. As is known in the art, multiple battery cells can be grouped together to provide a battery having the desired voltage and amperage. A flooded battery cell typically has a vent to allow excess oxygen and hydrogen gasses generated within the cell to exit to the atmosphere.

In a flooded battery cell, such as a lead-acid battery cell, the electrolyte is involved in the electrochemical reactions that take place within the battery cell to charge the battery and to produce electricity. Thus, the amount of energy that the battery cell can provide is dependent upon the available amount of electrolyte.

The amount of electrolyte in the battery cell also has an impact on the life of the cell. Desirably, the plates of the cell are immersed entirely in the electrolyte to prevent undesirable reactions that can occur by contact of the electrodes with the air that has entered through a vent of the battery cell. Thus, if there is a decrease in the amount of electrolyte within the cell to the extent that the electrodes are exposed to the air, the life of the battery can be affected adversely.

The electrochemical reactions within the battery cell causes a loss of water. The water is decomposed due to electrolysis into hydrogen and oxygen gases which are vented from the battery into the atmosphere. Thus, battery cells lose water from normal use. Various means for replenishing the cells with water are known.

In one well known method, Water can be manually added to each battery cell through a covered opening in the battery casing. However, this method can lead to electrolyte spillage if the batteries are overfilled, exposing the person filling the batteries to the battery acid and the risk of explosions. Also, where numerous battery cells are associated with each other, for example, grouped cells which are used to form a larger battery, manual filling can be time consuming and costly as each battery cell must be filled individually. Single point battery watering systems ("SPBW") were developed to address these concerns.

In an SPBW, each individual battery cell includes a water valve assembly through which water is added to replenish the electrolyte. Each valve assembly is connected via a common water line to a central water source, for example, a water tank, and each valve assembly includes a valve member to automatically shut off the flow of water into the individual battery cell when the desired level of electrolyte is reached. This allows a single water source to automatically fill multiple battery cells of a group of cells at a single time - thus, the name "single point battery watering system."

Single-point watering systems for aqueous batteries, such as those used on fork-lift trucks, use mechanical level-control valves, one for each cell, to shut off water flow to that cell when the electrolyte level reaches the full position. Typical mechanisms include simple float valves connected to a water tube or manifold. These are very well known in the art. Examples of such systems are shown in U.S. Patent Nos. 4,386,141, 5,832,946, 5,309,937, 4,522,896and 7,556,056. Such valves contain moving parts that can fail or gum up, and where there are numerous cells, such as an electric bus having a hundred or more cells, failing water valves can present a major problem.

Accordingly, one advantage of the present invention is a much simpler and less expensive battery watering system with improved reliability through the reduction or elimination of vulnerable moving parts, such as the mechanical level-control valves. Other advantages will be apparent from the description below.

### SUMMARY OF THE INVENTION

In accordance with the present invention there is provided a system for watering aqueous battery cells. A water conduit is connectable to a water source through which water is distributed to the battery cells. Nozzles are attached to and in fluid communication with the water conduit. Each of the nozzles is associated with one of the cells such that each of the cells receives water from the nozzle associated with it. The nozzles are configured to restrict the flow of water through it, and each of the nozzles is disposed to dispense water from the water conduit into one of the battery cells. The nozzles dispense substantially the same volume of water into each cell during each filling cycle.

In accordance with another aspect of the present invention, there is provided a method for simultaneously watering multiple aqueous battery cells, the method including: (a) supplying water to a plurality of nozzles at a substantially same pressure and time, the nozzles being configured to restrict water flow there-through and dispense a substantially same flow rate at the substantially same pressure; (b) passing the water through each of the nozzles; (c) dispensing the water from each of the nozzles to the multiple battery cells such that all water received by each of the nozzles is dispensed, each of the nozzles being associated with one of the cells such that each of the cells receives water from the nozzle associated therewith; and (d) ending the supply of water to the nozzles when the desired amount of water has been added to the cells such that all of said cells receive substantially the same amount of water. Other embodiments and variations are provided below.

### BRIEF DESCRIPTION OF THE DRAWINGS

The foregoing summary, as well as the following detailed description, will be better understood when read in conjunction with the accompanying drawings. For the purpose of illustrating the invention, there is shown in the drawings several preferred embodiments. It is understood, however, that this invention is not limited to the precise arrangements shown.

FIG. 1 illustrates one embodiment of the present invention;

FIG. 2 illustrates a second embodiment of the present invention;

FIG. 3 illustrates a third embodiment of the present invention;

FIG. 4 shows representative nozzles for use with the present invention; and

FIG. 5 shows an alternative arrangement of the nozzles.

### DETAILED DESCRIPTION

Preferred embodiments of the present invention will now be described with reference to the Figures. These preferred embodiments are not intended to be exhaustive or to limit the invention to the precise form disclosed. They are chosen and described to best explain the principles of the invention and its application and practical use and to enable others skilled in the art to best utilize the invention.

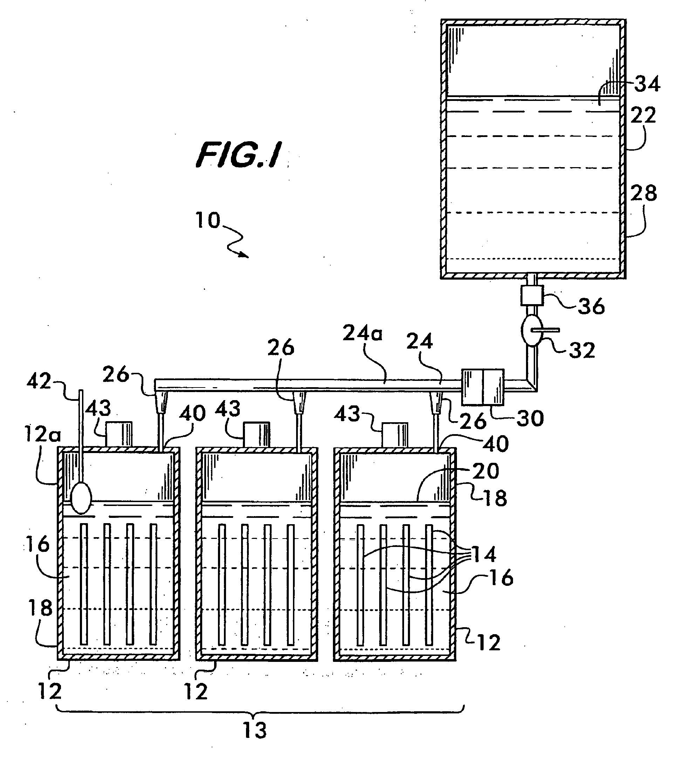

Initial reference is made to Fig. 1 which illustrates a manual system 10 for watering multiple aqueous battery cells 12 of a battery 13. As known in the art, each of the battery cells 12 has positive and negative plates 14 (electrodes) immersed in an aqueous electrolyte 16, all within a cell housing 18. The electrolyte 16 has a level 20 that drops as water is lost, and which rises as water is added to replenish the lost water. As noted above, it is desirable to maintain the electrolyte level 20 above the plates 14.

In its basic form, the watering system 10 has a water source 22, a water conduit 24 which is connectable to the water source 22 and through which water flows for distribution to each of the battery cells 12, and nozzles 26 through which water from the water conduit 24 is dispensed to the battery cells 12. The various elements and components will be described in further detail below.

The watering system 10 of the present invention is intended as a single point watering system ("SPBW") for multiple battery cells 12 and to be used in the same applications as the prior art valve containing systems described above. However, it uses no individual valves of any kind to control the electrolyte levels in the individual cells 12. Instead, it relies on the principle of dispensing substantially the same volume of water into each cell 12 during each filling cycle through the nozzles 26; the nozzles provide a substantially same flow rate of water over the same time period to distribute a substantially same amount of water to each cell 12. Therefore, so long as all the battery cells 12 in service consume water at approximately equal rates, and the system 10 dispenses water in substantially equal amounts to each cell 12, all of the cells will be watered satisfactorily. The result is a much simpler and less costly battery watering system 10 with improved reliability through the reduction or elimination of vulnerable moving parts. For example, an electric bus may have a hundred or more cells 12 so the reliability improvement of the present invention is substantial.

The water source 22 can be any suitable water supply such as those used in known SPBWs, and which is preferably pressurized to some degree. In the illustrated example, the water source 22 is an elevated water tank 28 which provides water 34 to the cells 12 via gravity. Other water sources may be, for example, a simple direct connection to a water tap, a mobile pressurized water tank, or a pumped source.

The present invention may use attached or detached water sources 22. If the battery cells 12 are of a battery 13 that is mobile, as in a fork lift truck or golf car, the water source 22 can be manually coupled to the water conduit 24 with a quick-connect fitting 30 as is known in the art. With the manual system shown in Fig. 1, the operator connects to the water supply 22 and fills the battery cells 12 by opening a manual water valve 32 to dispense the water until the desired level of electrolyte in the cells 12 is reached, at which time the valve 32 is closed.

In other applications, especially stationary applications such as solar batteries, the water source 22 can be fixed and connected to the battery cells 12 at all times, with or without intermediary valves or controls. This also may be possible for mobile applications, for example golf cars, where a small water tank 28 may be attached permanently to the vehicle and filled occasionally with a simple hose. In such cases, the dispensing of the water to the cells 12 by the watering system 10 can be carried out automatically at any time. Automatic systems 10 are further described below.

The water source 22 preferably provides clean water 34 which has no particulate matter that might block up the precision nozzles 26 or otherwise alter the resistance of the fluid path. As discussed below, the nozzles 26 have small openings which could be blocked by deposits. A filter 36 can be used to clean the water. There may be filters 36 in the water conduit 24 as well as on the battery cells 12. The filters 36 in the system may be any type available, for example, strainers, pleated material, fabrics, and micro-porous material, and be positioned anywhere in the water flow path prior to the nozzles 26. More than one filter may be used in the fluid path for redundancy both in series and in parallel. Removable and cleanable filters may be used in the system so that trapped particles may be removed and disposed of without risk of blocking the fluid path downstream. Pressure sensors may be added to the system or the controller to raise an alarm if the filters become blocked by any means or need cleaning.

To eliminate hard water deposits it is preferable to use de-ionized (demineralized) water. However, particularly in lead-acid batteries, it is believed that calcium carbonate deposits will quickly dissolve in the acidic environment, allowing the system to function.

The present invention is not dependent on any particular water pressure. In general, water of any quality suitable for batteries supplied by any means where the water pressure is above normal zero gauge pressure may be used. However, the water pressure should be substantially equal at the entrance of all the nozzles 26 as discussed below. For filling small battery cells 12 such as marine starter duties, gravity filling from a water supply 22 with a few feet of head will be satisfactory. For larger battery cells, such as fork truck batteries and stationary batteries, higher pressures will speed filling so a pump of some kind may be preferable.

The water conduit 24 is connectable to the water source 22 to be in fluid communication therewith so as to provide water to the nozzles 26. Any suitable water conduit may be used, such as tubing and manifolds as known in the art, as well as conduit of any shape or configuration. As shown in Fig. 1, one form of the water conduit 24 provides a single water supply tubing 24a running to all of the battery cells 12 in series, and attached to the nozzles 26 which in turn deliver water to the cells 12. In other forms, the water conduit 24 can be formed as a series/parallel arrangement of tubes, such as a single tube leading to a manifold from which separate tubes run to each nozzle 26. For larger batteries having a large number of battery cells 12, there can be a series of multiple manifolds and tubes with each manifold having tubing connecting to a group of cells 12 in series or parallel to serve the entire battery 13. Any suitable material can be used such as plastic tubing and manifolds.

A float or other indicator 42 can be provided in at least one cell 12a to permit observation by the operator of the electrolyte level 20 as it rises during the watering operation. The operator would fill the cells 12 simultaneously until the indicator 42 shows that the electrolyte of at least the one cell 12a has reached a desired or predetermined level, e.g., it is full. The operator then turns off the valve 32 and disconnects the coupling 30. If an indicator is to be provided in a single cell 12, it is preferred to place the indicator in the cell 12a that is likely to lose the most amount of water, e.g., a cell 12 that may run hotter than the others such as a cell positioned between other cells. One preferable type of electronic indicator is disclosed in U.S. Patent 5,936,382.

The water conduit 24 should be configured to distribute water to each nozzle 26 as equitably as possible. As will be explained in more detail below, the water should be supplied at substantially the same pressure to all the nozzles 26.

The nozzles 26 are connected to and in communication with the water conduit 24 to receive water therefrom, and in communication with the battery cells 12 to dispense water to them. The nozzles have an internal opening, such as a passageway or orifice through which water from said conduit can flow. The nozzles 26 dispense water without interruption; as used herein, this means that all water distributed to the nozzles 26 from the water conduit 24 passes through the nozzles to the respective battery cells 12; there are no valves or other means for interfering with or preventing the water from passing through the nozzles and flowing freely to the battery cells 12. If there is any additional tubing or conduit downstream of the nozzles 26, it should be sized and configured so as to not interfere with the flow of water from the nozzles to the cells.

Each of the nozzles 26 are also configured and/or selected to dispense water at a flow rate for a given water supply pressure that is substantially the same as that of the other nozzles 26 of the system 10. Put another way, the nozzles regulate almost identical rates of flow of water to each cell 12 for the duration of time that water flows to the nozzles. All nozzles 26 receive water from the conduit 24 over the same time period, beginning substantially at the same time and ending substantially at the same time. Due to the similar precise flow rates though these nozzles, and the uniform pressure of the water supplied via the conduit 24, and without interruption of the flow dispensed from each nozzle, each cell 12 will get substantially the same amount of water per second delivered. Thus, if all nozzles receive the water over the same period of time, each cell will receive a substantially same amount of water. Any variations in electrolyte levels 20 within the cells 12 over time will be from either a lack of mechanical precision of the nozzles or a variation of electrochemical reactions in the cells 12 causing different water consumption rates, the latter being the bigger concern, but such variations are believed to be manageable.

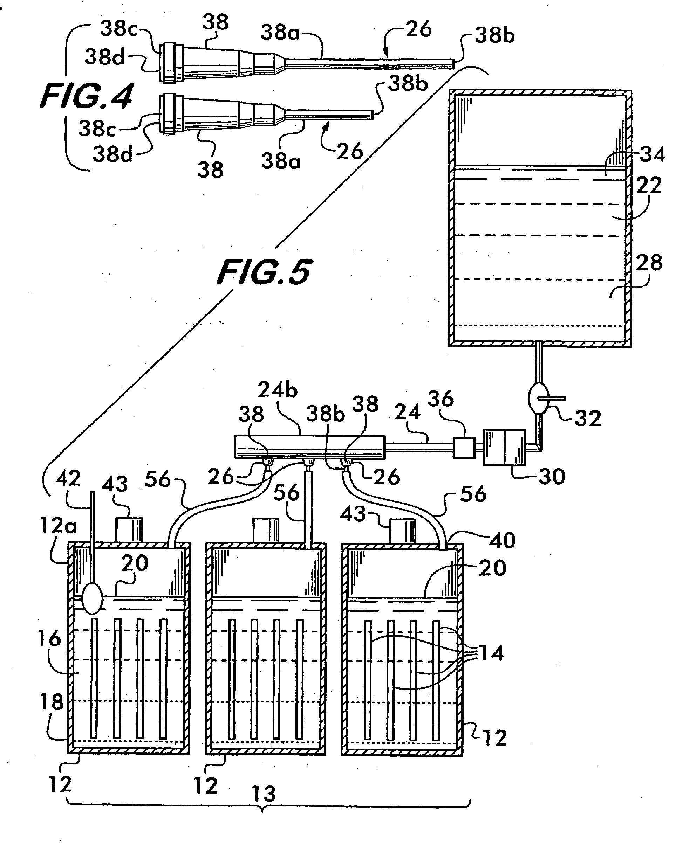

The nozzles 26 can be any suitable nozzle like device or means capable of providing the uniform flow rate for all the nozzles 26 used in a particular watering system 10. With reference to Fig. 4 showing two examples of a preferred type, the nozzle 12 can be in the form of a dispensing needle 38 of the type used for dispensing fluids, adhesives, solvents, oils, and pastes having a type 304 stainless steel stem 38a with a blunt tip 38b, forming the nozzle outlet, and a polypropylene Luer Lock hub 38c at the needle inlet 38d designed to fit with Luer Lock connections as is known in the art. Such nozzles are available from McMaster-Carr Supply Company. Similar needles can be made out of PTFE instead of stainless steel and are also provided by McMaster-Carr Supply Company. It is appreciated that the water conduit 24 will have a complementary connection for the nozzle type used. For example, if a nozzle 26 having a Luer Lock type connection is used (a type of threaded connection), then the water conduit 24 will have a complimentary connector. Threaded connections allow the nozzles to be removably attached to said water conduit, allowing quick system set up and part replacement.

Other preferred materials for the nozzles include acid resistant metal such as 316 stainless steel, Hastelloy, Carpenter 20, nickel and the like, made as hypodermic needle tubing, or drawn glass tubing. Teflon or other plastic tubing and other metals and ceramics are also acceptable.

The precision nozzles 26 are not limited to such tubular structures and can include any means of restricting flow so as to provide a reliably constant flow rate among the nozzles. For example, suitable nozzles 26 can include precision orifices, a porous glass frit, a porous plastic plug and so on. These also may include long, narrow tubes in the fluid path, tubes with convoluted fluid paths, porous material that add resistance to the fluid path and so on. In some applications, it may be preferable to have a larger internal diameter of flow but with a convoluted path as this allows larger particles to pass through without blocking the nozzle.

The level of precision between nozzles necessary to ensure that all of the nozzles 26 used in a particular watering system 10 provide substantially the same water flow rate varies depending on the specific battery use. The term "precision" as used herein is directed to the variation in flow rate between nozzles, the greater the precision, the less the variation. For example, some batteries 13 do not require as great precision as others because they require watering only a few times over their entire working life, such as golf car batteries which may be watered every other month for two years, or 12 times in all. Thus, a slight variation in flow rate among nozzles will cause minimal differences in electrolyte levels of the different cells. On the other hand, some batteries require greater precision because they consume more water over longer lives. For example, a heavy duty fork truck battery may have to be watered every month for 5 years or 60 times in all. Thus, the golf car battery requires less precision than the fork truck battery.

It is believed helpful to classify different battery applications based on the inches of water that they consume over their individual lifetimes. For example, a golf car battery may be rated at 8 inches of water during its life whereas a heavy duty fork truck battery may be rated at over 60 inches of water during its life. A 1% variation in the nozzle output of 8 inches results in a negligible variation of 0.08 inches in the first case, but a more substantial 0.6 inches in the second case. Thus more precision between the nozzles 26 may be desirable in the latter battery, or it may be that the electrolyte levels in the latter battery will require checking manually once or twice during its 5 year life which is believed to be commercially acceptable and can easily be arranged in any maintenance schedule.

The desired uniformity or precision between the nozzles 26 of a given watering system 10 can be machined to the level of precision desired using known techniques or by use of special precision orifices made of precious stones such as rubies. These options, however, are very costly. As a less expensive alternative, uniformity between nozzles, and therefore "precision" or "accuracy" of filling, can be achieved by water testing each nozzle 26 individually and classifying it according to how much water flow it passes at a fixed water pressure. This is believed to be a highly accurate yet low cost test. The nozzles are then classified into categories with almost identical flow rates, preferably 1% apart. That is, starting with the minimum acceptable flow rate, defined as "M", the first category should fall in the range from M to M+1 %; the second category should fall in the range from M+1 % to M+2%; and so on to the maximum. Thus, all nozzles within a category will have a relative precision range of +/- 0.5%. The nozzles for a given system 10 will be selected from a particular category of nozzles. An even more efficient way to achieve this precision is to attach a number of nozzles to a common conduit and apply a precisely controlled water pressure to the conduit, for example from a constant head device or a precision pressure regulator. The nozzles are pointed upwards so that they create a number of vertical water jets the relative heights of which indicate their assigned category.

Further discussion about the precision of the nozzles with examples is provided. A battery cell that must be filled 100 times in its life, such as a heavy duty fork truck battery, may require 20 times more precision than a battery that has to be filled 5 times, such as a stationary battery located in a cool battery room. If the water filling process raises the electrolyte level of a cell one inch per fill cycle in each case, the former case will have received a cumulative total of 100 inches of water in its lifetime. A 1% difference in the precision of the nozzles, in two adjacent cells, would therefore produce a variation in level of 1 inch during the battery's lifetime. This is believed to be an acceptable amount. In the latter case of the stationary cell, the cell 12 will receive a cumulative total of only 5 inches of water in its lifetime. If a 1 inch level variation between cells is also acceptable here which is likely, then a 20% variation of flow rate is acceptable in this application. In a more extreme case, a pure lead stationary cell, which only needs watering twice in its lifetime, the acceptable variation may be as high as 50%. Therefore, the need for nozzle precision is dependent on the application: the more water consumed by the battery in its life, the more precise the nozzles should be. Alternately, it may be stated according to this formula: Precision (P) = (Allowable difference in levels at end of life in inches/Lifetime water added in inches).

The following table provides examples:

| Application | a. Lifetime water added in inches | b. Allowable difference in level at end of life | Ratio of a/b | Nozzle Precision Required |
|---|---|---|---|---|
| Motive Power | 100 | 1.0 | 1 /100 | 1% |
| Stationary Lead-Antimony | 10 | 1.0 | 1/10 | 10% |
| Stationary Lead-Calcium | 5 | 1.0 | 1/5 | 20% |
| Stationary Pure Lead | 2 | 1.0 | 1/2 | 50% |

In practice, a 1 percent precision is believed readily attainable and thus preferred on all applications with the result that variations in levels in the stationary batteries would be imperceptible, but less precision may be acceptable in certain applications.

To reiterate, the nozzles 26 act to restrict the flow of water provided by the water conduit so as to dispense a controlled amount, i.e., each nozzle dispenses water at a flow rate that is substantially the same as that of the other nozzles. The inner diameter or bore of the nozzles 26 is sized to act as a constricted water passage as compared to the flow rate of the water conduit to permit precise control over the water flow rate through it. The inner diameter will vary with the application. Large batteries preferably will have water flow rates that are more than that of smaller batteries. For example, a golf-car battery of 120 Ah capacity may need 120 ml of water per cell added every fill cycle, usually about every month. A 500 Ah fork truck battery would need 500 ml per cell. A 5000 Ah diesel electric submarine battery may need 5 litres per cell. The nozzle diameter or bore is chosen from a range of available nozzles based on the following factors: 1) the amount of water per cell required, 2) the number of cells, 3) the time available for filling, and 4) the water pressure available. Given these factors, the user can determine how much water flow is required per nozzle and make the selection accordingly. For example, a fork truck battery that needs to be filled in 15 seconds preferably would have a nozzle with an inside diameter of about 0.06 inch. A golf car battery under full automatic control of the water system preferably would have a smaller nozzle, perhaps 0.015 inches.

The pressure of the water affects the flow rate of the water through the nozzles. However, it is not a critical factor in the reliability of the system so long as it is within a certain wide range of pressures. For example, a minimum limit for the water pressure may be reached when the surface tension force between the water and the nozzle 26 is such that a small bubble of air sticks to the wall of the nozzle, thereby creating a blockage, and the pressure is too low to clear the blockage. Generally, this low pressure may only be in the order of a few inches of water. A maximum limit for the pressure may be reached when the jet of water emerges from the nozzle with such velocity as to damage the contents of the cell, such as the plates 14. The practical pressure range is believed to be more a function of available pressure sources. For example, gravity filling inside an industrial building might be limited by the height of the ceiling of the building so that the water pressure would be limited to 30 or 40 feet of water. Water faucets from the public water supply is likewise limited in most industrial buildings to 40 or 60 psi. Small electrically powered pumps that are commercially available are usually limited to a similar 40-60 psi. Therefore, in practice, a variety of pressures, ranging from 6 inches of water to 200 psi should be acceptable as long as the pressure is substantially uniform among the nozzles. Even the 6 inches of water lower limit may be reduced if air bubbles can be eliminated from the system by, for example, keeping the water still and not aerated.

Each nozzle 26 may be located either inside or outside of the cell 12, the water distributed by the nozzle being directed into the cell 12 to raise the electrolyte level 20 of that cell. In the example of Fig. 1, the nozzles 26 extend through an opening 40 in the top of the battery housing 18 so as to dispense the water directly into the cell 12. In such embodiments it is preferable to mount or support the nozzles 26 on the individual battery cells 12.

The water conduit 24 preferably has a substantially larger bore or internal diameter than that of the nozzles 26. In this way, the water pressure will be substantially uniform along the water conduit 24 and all nozzles 26 will have the substantially same flow rate of the water.

If the nozzles 26 are very small in diameter, the water conduit 24 can also be small. Trials were made with nozzles having an internal diameter (i.d.) ranging from about 0.001 to 0.1 inches, the former being for very small batteries and the latter for very large ones. For practical applications on medium size batteries, the preferred i.d. is in the range of about 0.015 to 0.020 inches. A practical water conduit i.d. for such nozzles 26 is about 1/4 to 3/8 of an inch but larger water conduit diameters are practical.

As an example, the internal diameter of a 1/4 inch water conduit 24 is 12.5 times greater than that of a 0.020 i.d. nozzle so the cross sectional area is 156 times larger, providing a large safety factor which allows for many nozzles 26 to be supplied via one water conduit 24. It is believed that the cross sectional area of the water conduit 24 preferably should not be less than 10 times the total cumulative cross sectional areas of the nozzles it supplies. Therefore, a 1/4 inch conduit 24 may supply up to 15 nozzles 26 and a 3/8 diameter water conduit may supply 35 nozzles and so on. However, multiple water conduits 28 can be fluidly connected in parallel indefinitely to increase the number of nozzles served.

The method carried out by the manual system 10 as shown in Fig. 1 is now described. Watering of the battery cells 12 is preferably effected when the electrolyte levels 20 are low, but before the plates 14 are exposed. The water supply 22, here a gravity tank elevated above the cells 12, is connected to the water conduit 24 at the quick connector 30. The valve 32 is operated to supply water to the conduit 24 which is then distributed to each of the cells 12 substantially simultaneously through the nozzles 26. The operator fills the cells 12 simultaneously until the indicator 42 shows that at least that one cell 12a is filled to the desired level. The operator then turns off the valve 32 stopping the flow of water to the cells substantially simultaneously, and disconnects the coupling 30. The filling cycle is complete.

As previously explained, the water distributed to each cell 12 passes through a nozzle 26, at least one for each cell, positioned in the fluid path between the water conduit 24 and the particular cell. If mounted to the cell 12, as in Fig. 1, the nozzle may be positioned in any opening 40 in the cell housing 18. Although the water is shown delivered to the cells above the liquid level 20, it is possible to deliver the water below the liquid level. The normal gassing vent 43 of the cell, which is preferably separate from the opening 40, remains unaltered. The nozzles 26 act as a restrictor of the water flow as compared to the water conduit 24, allowing a precise or controlled flow rate of water to pass from the water conduit 24 through to the cells 12, the amount of water flow being substantially equal among all of the nozzles.

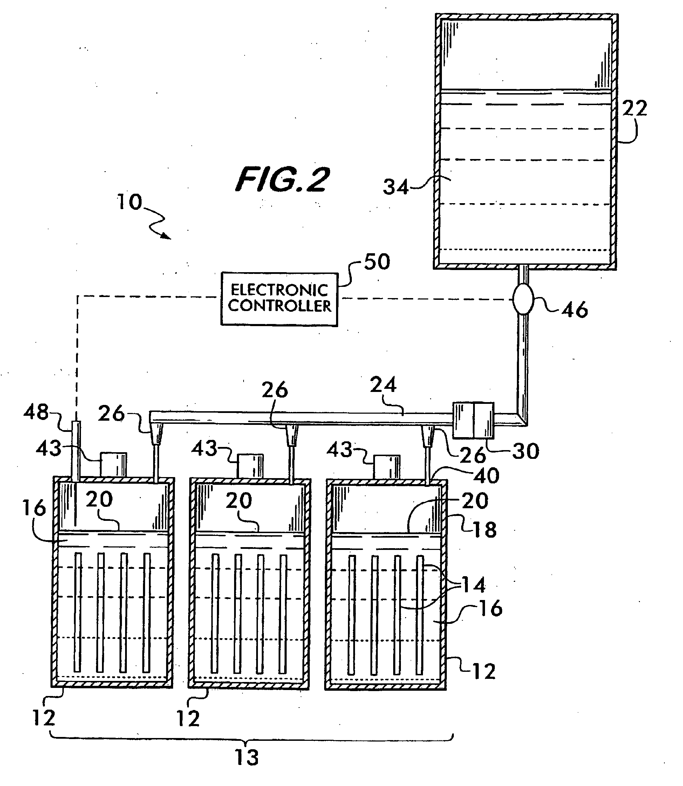

With reference to Fig. 2, another embodiment of the present invention is now described. This is similar to the system 10 shown in Fig. 1, but is an automatic version. Instead of the manual valve 30, an electrically controlled valve 46, for example a solenoid valve, controls the water flow from the water source 22 to the water conduit 24. The opening and/or the closing of the valve 46, depending on the system configuration, can be based on the signal from an electronic level indicator 48 placed in at least one cell 12 to sense the electrolyte level. Any suitable valve that can be controlled by an electrical signal may be used. The level indicator 48, if provided in one or less than all the cells 12, preferably should be in the cell or cells likely to lose the most amount of water to minimize the risk of insufficient watering. Any suitable level indicator, such as sensors and probes known in the art, may be used.

An electronic controller 50, receiving a signal from the indicator 48, can automatically turn on the valve 46 when the electrolyte level 20 reaches a predetermined low point. A timer or some other means can be provided for turning off the valve 46, e.g., a timer provided by the controller 50 with a preset or programmed time period for adding the desired amount of water after which time period the controller closes the valve. As discussed below, other means include a second electrolyte level indicator 48 positioned in the cell to determine when the electrolyte level reaches the desired level and, via the controller, turns off the valve 46. The controller 50 may provide other intelligent functions. For example, it may prevent watering until the battery is gassing and until the level 20 has reached its maximum during charge, or it may not provide water if the water pressure in the water conduit 24 is too low to guarantee accurate filling of all cells. When an electronic controller manages the watering cycle by means of the solenoid valve, the solenoid valve prevents any water from entering the cells, even if the system is connected to a pressurized water supply 22 indefinitely. This is believed to be a significant improvement over existing mechanical systems which leak slightly and cannot be connected to a water source for long periods. Any suitable controller may be used, and in any configuration such as a stand alone controller or one combined with other components such as the level indicator.

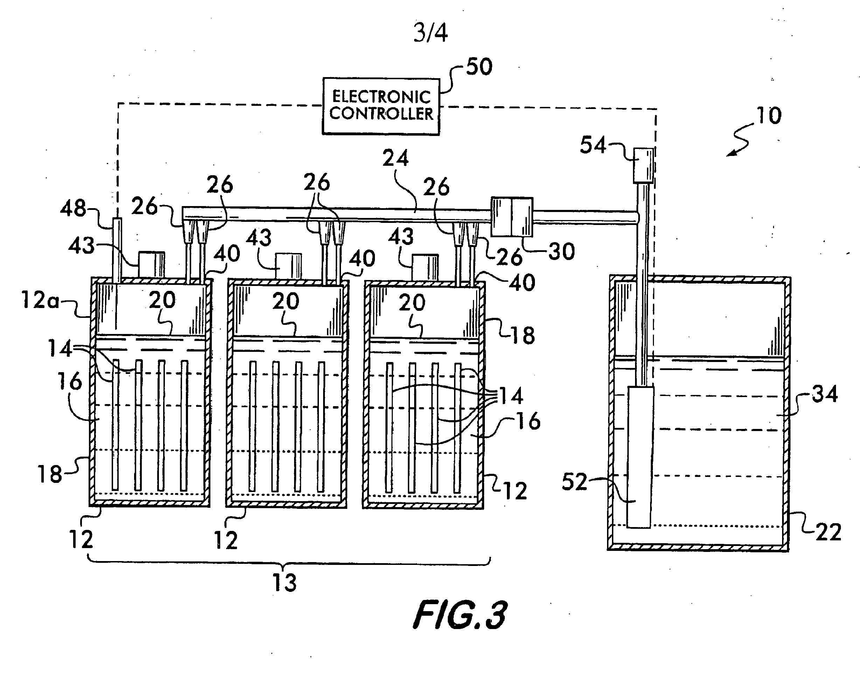

Shown in Fig. 3 is another embodiment of the present invention, this being a second automatic version of the system 10. In this version, the water supply 22 includes a water pump 52 which can be switched on and off directly by the controller 50, based on a signal from the indicator 48, when water is required. As with the embodiment of Fig. 2, with a single level indicator 48, a timer can be used to end the supply of water by shutting off the pump, e.g., a timer can be provided by the controller with a preset or programmed time to add the desired amount of water, or a second electrolyte level indicator 48 positioned in the cell to sense the desired level of electrolyte can be used to shut off the pump.

If the pump 52 is of a submersible type, a vacuum breaker 54 in the water conduit 24 is preferred to break the siphon created once the pump 52 is turned off. With a diaphragm pump, a vacuum breaker 54 may not be necessary, but still may be preferred. In either case, water may be left in the conduit 24 after filling, preventing any passage of gas explosions between cells 12 which can occur if the conduit 24 were to become filled with hydrogen and oxygen gasses from the cells 12.

In the embodiment of Fig. 3, each nozzle 26 associated with each cell 12 is formed of multiple such nozzles, here there being two such nozzles for each cell as shown. Multiple nozzles 26 for each cell 12 may be advantageous in some applications as further described below.

There are several variations of this invention in which the controls of the automatic systems shown in Figures 2 and 3 can be modified. For example, in one embodiment, instead of one level-sensing electronic indicator 48, two indicators 48, of different heights, can be placed in the pilot cell 12a to control the solenoid valve or pump that delivers water to the cells. The low-level indicator opens the solenoid valve to begin filling and the high-level indicator closes the valve when the electrolyte has risen to a satisfactory level. The result is a battery which is, in effect, self-watering and, therefore, practically maintenance-free. In one variation, the probes may be in different cells.

In another low cost embodiment related to that already shown in Figures 2 and 3, a single level indicator 48 switches the water flow on when the electrolyte level 20 is low, but a simple timer switches the water off (e.g., via control of the valve 46 or pump 52 as discussed above). The time period for the timer can be chosen to provide an adequate amount of water without necessarily filling the cells to the full electrolyte level. Since the level indicator 48 will simply re-initiate the watering cycle once the electrolyte level 20 becomes low again, even if too little water is added in any one water fill cycle, the system will initiate additional water fill cycles as needed to maintain an adequate electrolyte level. In this way, the system may operate more often but the result is the same in that the cells 12 will always have adequate water. In an extreme case, such as daily watering, this approach provides an ideal "constant level" electrolyte control.

In another variation, the level indicator 48 may be formed as a float level indicator 42 having a magnetic relay that responds to a level 20. Another possibility is to determine electrolyte levels by measuring the pressure in a tube immersed in the electrolyte 16.

An alternative arrangement of the nozzles 26 from that discussed above is disclosed with reference to Fig. 5. The nozzles 26 are preferably positioned between the water conduit 24 and the cells 12, but need not be mounted to the cells or extend within the cells. For example, the water conduit 24 can include a manifold 24b to which the nozzles 26 are connected, e.g., threaded or Luer Lock connectors, to receive water therefrom. With equal water pressure on the inlet side 38 of the nozzles 26, the nozzles will allow a substantially equal amount of water therethrough which then flows unrestricted through the nozzle outlet conduit 56 to the cell associated with that particular nozzle. The conduit 56 downstream of the nozzles 26 should have a internal diameter sufficiently larger than the nozzles 26 to provide no significant resistance to the water flow that could interfere with the equitable distribution of the water to each cell, e.g., interfere with the water flow rate such that one cell receives water at a slower flow rate than another.

A problem known to various types of prior art water systems is that oxygen and hydrogen gasses from the battery cell can enter the water conduit 24 to create a path for an explosion or flame to travel from one cell 12 to another. With the present invention, however, nozzles 26 with an internal diameter of about 0.010 inches or less will act as a flash arrestor since such a small diameter will quench an oxy-hydrogen flame attempting to pass through. Therefore, it is possible to provide multiple nozzles 26 for each cell 12 as shown in Fig. 3 to provide the desired amounts of water while also acting as a flash arrestor. Multiple nozzles also have the advantage of averaging out the discrepancies between nozzles and become, in essence, more precise as a group than the nozzles are individually. It may be possible, therefore, to eliminate the testing described above. Given that the nozzles perform substantially the same, it is appreciated that the cells 12 should be served by the same number of nozzles.

In another embodiment, a fixed capacity water supply 22, e.g., a reservoir of water, sized appropriately for the battery 13 it fills can be used. The reservoir may be located above the battery for gravity filling or a pump may be used. Preferably an electrolyte level sensor 48 in one representative cell automatically opens a solenoid valve (for gravity fill) or turns on a pump, thereby draining the reservoir. After this, the solenoid (or pump) is turned off and the reservoir is refilled for the next cycle, preferably automatically. Here no separate level indicator is needed for shutting the water off, and overfilling is prevented under almost all conditions. This is believed to be a practical embodiment for fork trucks and the like and also for boat batteries where the battery may be buried in the hold of a yacht and difficult to get to, and even for stationary batteries in office-like environments where electrolyte overflow would be unacceptable and moving-part valve systems have long been rejected. With no moving parts in the nozzles, this system is both low in cost and extremely reliable.

A major application for SPBWs is for deep-cycle batteries, such as fork truck batteries, which are usually plugged into a charger every night for recharging. If, at the same time, the water connection 30 is made between the battery 13 and the water supply 22, the battery can become completely self-determining as far as watering is concerned.

The period for watering the battery 13 may be once per day, per week, per month, or per year; it being a matter of programming the controller in an automatic system. The shorter the period, the less water is required for each fill and the more constant the electrolyte level 20 will be in the cell 12. Therefore, frequent filling may be ideal for high-energy-density cells with tall plates 14 and little free-acid volume. On the other hand, extended periods between fillings are ideal for low-maintenance batteries. In an extreme case, a long interval such as 1 year means that a service person only has to water the battery 5 times in its 5-year life.

Another application includes cells used in stationary battery applications such as solar cell systems, UPS systems, telecom systems and so on with both lead-acid or nickel-alkaline cells. In this case, in an automatic system, the controller may be attached to the wall or rack. The same basic principles apply but the water may be left plugged in indefinitely; the battery will simply draw water as it needs it.

There are numerous other variations and embodiments of the basic invention. Some are discussed below. The automatic water valve 46, e.g., a solenoid valve, may be any type of valve that will respond to the controller's signal to control the flow of water. That is, it may be powered by an electric motor, a thermal device such as a bi-metallic strip, or by hot paraffin wax, or by Nitinol "memory wire" or any suitable controllable mechanism with an on/off capability. The normally-closed solenoid valve may even be replaced with a normally-open one, but with further controls in the system to prevent accidental filling. There may be two or more solenoid valves in the system or 3-way valves as required for sequential fill.

The water conduit 24 and nozzles 26 may also be used to cool the battery cells 12 by passing air into the cells from an external air pump or compressed air line. The cooling function is effected by evaporating the water in the electrolyte 16. The precise fluid-path restrictions of the nozzles that permit almost equal amounts of water to enter each cell during filling also permit almost equal flow rates of air to pass through the cells during cooling. The result is a uniform water evaporation rate and uniform water loss rate which is made up for by uniform water additions.

The water conduit 24 may also be used as a central venting system for the release of hydrogen and oxygen gas from the cells 12 to a central discharge point. In this case, the conduit 24 is drained of water and the cell vent 43 is sealed with a pressure relief valve such as those found on valve-regulated batteries (VRLA batteries). During charge of the cell, the cell gasses oxy-hydrogen which is directed through the conduit 24 to the outside. If the nozzles 26 in the fluid path are about one hundredth of an inch or less in internal diameter, the nozzles will quench an oxy-hydrogen flame.

Another embodiment of the system 10 would install a low-level electrolyte indicator 48 in a hot cell 12, which uses more water, and thereby avoids the risk of cell dry out. Similarly, it would install a high-level electrolyte probe in a cool cell, which uses less water, and thereby reduces the risk of overflow. Another variant would install electrolyte indicators in all of the cells 12 and connect them in such a way that when one cell is too high, a warning signal would be given, permitting inspection by an operator.

While the embodiments illustrated herein can be used as after market devices for installation in existing batteries, those in the art will recognize that similar and suitably modified devices can be incorporated in the battery during manufacture.

It is also appreciated that the invention is directed to components and subcomponents of the system describe above. For example, a subcomponent having a water conduit 24 with the nozzles 26 as described above for use with aqueous battery cells 12, but separate therefrom, would be within the spirit of the invention.
It is understood that the above-identified arrangements are merely illustrative of the many possible specific embodiments which represent applications of the present invention. Numerous and varied other arrangements can readily be devised in accordance with the principles of the invention without departing from the scope of the invention.

## Claims

1. An aqueous battery watering system (10), comprising:
multiple battery cells (12), each of said cells containing a liquid aqueous electrolyte (16);
a water conduit (24) connectable to a water source (22) and through which water (34) from said water source can flow for distribution to said multiple battery cells (12);
nozzles (26) attached to and in fluid communication with said water conduit (24), each of said nozzles (26) being associated with one of said cells (12) such that each of said cells (12) receives water from the nozzle associated therewith, each of said nozzles (26) having an internal opening through which water from said conduit (24) can flow to said cells (12), each of said nozzles (26) being configured to restrict the flow of water therethrough, and each of said nozzles (26) being disposed to dispense water from said water conduit (24) into one of said multiple battery cells (12);
**characterized in that** said dispensing is such that each of said nozzles (26) dispenses substantially the same volume of water into each cell (12) during each filling cycle.

2. The aqueous battery watering system (10) in accordance with claim 1 wherein all of said nozzles (26) are configured to provide a substantially equal flow rate of water there through for a given water pressure.

3. The aqueous battery watering system (10) in accordance with claim 1 or 2 wherein each of said nozzles (26) is configured to dispense water from said water conduit (24) into one of said multiple battery cells (12) without interruption.

4. The aqueous battery watering system (10) in accordance with any one of claims 1 to 3 wherein each of said multiple nozzles (26) dispenses water at a flow rate within 1% accuracy of the other of said multiple nozzles (26) for a given water pressure.

5. The aqueous battery watering system (10) in accordance with any one of claims 1 to 3 wherein each of said multiple nozzles (26) dispenses water at a flow rate within 2% accuracy of the other of said multiple nozzles (26) for a given water pressure.

6. The aqueous battery watering system (10) in accordance with any one of claims 1 to 3 wherein each of said multiple nozzles (26) dispenses water at a flow rate within 5% accuracy of the other of said multiple nozzles (26) for a given water pressure.

7. The aqueous battery watering system (10) in accordance with any one of claims 1 to 6 wherein each of said nozzles (26) has an internal diameter no greater than 0.051 cm (0.02 inches).

8. The aqueous battery watering system (10) in accordance with any one of claims 1 to 6 wherein each of said nozzles (26) has an internal diameter no greater than 0.152 cm (0.06 inches).

9. The aqueous battery watering system (10) in accordance with any one of claims 1 to 6 wherein each of said nozzles (26) has an internal diameter no greater than 0.254 cm (0.1 inches).

10. The aqueous battery watering system (10) in accordance with any one of claims 1 to 9 further comprising:
an electrolyte level monitor (48) positioned within at least one of said multiple battery cells (12) for monitoring the electrolyte level (20) within;
a controller (50) in communication with said electrolyte level monitor (48) to receive a signal therefrom; and
an automatically operable valve (46) in fluid communication with said water conduit (24) and disposed to control the flow of water to said water conduit (24), said valve being in communication with said controller (50) for receiving a signal therefrom.

11. The aqueous battery watering system (10) in accordance with any one of claims 1 to 9 further comprising:
an electrolyte level monitor (48) positioned within at least one of said multiple battery cells (12) for monitoring the electrolyte level (20) within;
a controller (50) in communication with said electrolyte level monitor (48) to receive a signal therefrom;
a pump (52) connected to and in fluid communication with said water conduit (24) so as to provide water to said water conduit (24) to all said nozzles (26), said pump (52) being in communication with said controller (50) for receiving a signal therefrom for causing said pump (52) to provide water to said water conduit (24).

12. The aqueous battery watering system (10) in accordance with any one of claims 1 to 11 wherein each of said cells (12) receives water from multiple said nozzles (26).

13. The aqueous battery watering system (10) in accordance with any one of claims 1 to 12 wherein said water conduit (24) comprises a manifold (24b) and multiple conduits (56) extending from said manifold (24b) to each of said individual cells.

14. The aqueous battery watering system (10) in accordance with any one of claims 1 to 13 wherein said water conduit (24) has an inner cross sectional area at least ten times greater than the cumulative cross sectional areas of the nozzles (26) connected thereto to ensure that the water pressure provided to said nozzles (26) is substantially equal.

15. A method of simultaneously watering multiple aqueous battery cells (12), said method comprising:
(a) supplying water to a plurality of nozzles (26) at a substantially same pressure and time, said nozzles (26) being configured to restrict water flow there through and dispense a substantially same flow rate at said substantially same pressure;
(b) passing the water through each of said nozzles (26);
(c) dispensing the water from each of said nozzles (26) to the multiple battery cells (12) such that all water received by each of said nozzles (26) is dispensed, each of said nozzles (26) being associated with one of said cells (12) such that each of said cells (12) receives water from the nozzle (26) associated therewith; and
(d) ending said supply of water to all of said nozzles (26) when the desired amount of water has been added to said cells (12) such that all of said cells (12) receive substantially the same amount of water.

16. A method of simultaneously watering multiple aqueous battery cells (12) in accordance with claim 1 wherein step (c) is carried out by use of an electrolyte level indicator (48) configured to control an automatic valve (46) which controls the flow of water to said nozzles (26).

17. A method of simultaneously watering multiple aqueous battery cells (12) in accordance with claim 15 wherein step (c) comprises the step of sending a signal to an automatic pump (52) which controls the flow of water to said nozzles (26).

18. A method of simultaneously watering multiple aqueous battery cells (12) in accordance with any one of claims 15 to 17 wherein each of said nozzles (26) associated with each of said cells (12) comprises multiple nozzles (26).

19. A method of simultaneously watering multiple aqueous battery cells (12) in accordance with any one of claims 15 to 18 wherein each of said nozzles (26) has an internal water passage no larger than 0.025 cm (0.01 inches) so as to act as a flash arrestor.

20. A method of simultaneously watering multiple aqueous battery cells (12) in accordance with any one of claims 15 to 18 wherein each of said multiple nozzles (26) dispenses water at a flow rate within 5% accuracy of the other of said multiple nozzles (26) for a given water pressure supplied to said nozzle (26).

21. A method of simultaneously watering multiple aqueous battery cells (12) in accordance with any one of claims 15 to 18 wherein each of said multiple nozzles (26) dispenses water at a flow rate within 2% accuracy of the other of said multiple nozzles (26) for a given water pressure supplied to said nozzle (26).

22. A method of simultaneously watering multiple aqueous battery cells (12) in accordance with any one of claims 15 to 18 wherein each of said multiple nozzles (26) dispenses water at a flow rate within 1% accuracy of the other of said multiple nozzles (26) for a given water pressure supplied to said nozzle (26).

23. A method of simultaneously watering multiple aqueous battery cells (12) in accordance with any one of claims 15 to 22 wherein step (d) is carried out by use of a timer to determine when the desired amount of water has been added to at least one of said cells (12), the supply of water being ended after a predetermined amount of time has passed.

24. A method of simultaneously watering multiple aqueous battery cells (12) in accordance with any one of claims 15 to 23 wherein step (c) includes sensing a low electrolyte level in at least one of said cells (12).

25. A method of simultaneously watering multiple aqueous battery cells (12) in accordance with any one of claims 15 to 24 wherein step (c) includes providing said flow of water through said nozzles (26) into said cells (12) without interruption.

26. A method of simultaneously watering multiple aqueous battery cells (12) in accordance with any one of claims 15 to 25, further comprising:
(e) repeating steps (a) through (d) when said cells (12) need additional water.

## Patentansprüche

1. Wässerungssystem (10) für eine wasserhaltige Batterie, welches aufweist:
eine Mehrzahl von Batteriezellen (12), wobei jede der Zellen einen flüssigen wässerigen Elektrolyten (16) enthält;
eine Wasserleitung (24), die mit einer Wasserquelle (22) verbindbar ist und durch die Wasser (34) von der Wasserquelle zu einer Verteilung zu der Mehrzahl von Batteriezellen (12) fließen kann;
Düsen (26), die befestigt an der und in Fließverbindung mit der Wasserleitung (24) sind, wobei jede der Düsen (26) mit einer der Zellen (12) so assoziiert ist, dass jede der Zellen (12) Wasser von der mit ihr assoziierten Düse erhält, jede der Düsen (26) eine innere Öffnung hat, durch die Wasser von der Leitung (24) zu den Zellen (12) fließen kann, jede der Düsen (26) konfiguriert ist, den Fluss von Wasser durch sie hindurch zu beschränken, und jede der Düsen (26) angeordnet ist, Wasser von der Wasserleitung (24) in eine der Mehrzahl von Batteriezellen (12) auszugeben;
**dadurch gekennzeichnet, dass** das Ausgeben so ist, dass jede der Düsen (26) im Wesentlichen dieselbe Menge Wasser in jede Zelle (12) während jedes Füllzyklus ausgibt.

2. Für eine wasserhaltige Batterie vorgesehenes Wässerungssystem (10) gemäß Anspruch 1, wobei all die Düsen (26) konfiguriert sind, eine im Wesentlichen gleiche Fließrate von Wasser durch sie hindurch bei einem gegebenen Wasserdruck zu ergeben.

3. Für eine wasserhaltige Batterie vorgesehenes Wässerungssystem (10) gemäß Anspruch 1 oder 2, wobei jede der Düsen (26) konfiguriert ist, Wasser von der Wasserleitung (24) in eine der Mehrzahl von Batteriezellen (12) ohne Unterbrechung auszugeben.

4. Für eine wasserhaltige Batterie vorgesehenes Wässerungssystem (10) gemäß einem der Ansprüche 1 bis 3, wobei jede der Mehrzahl von Düsen (26) Wasser mit einer Fließrate innerhalb einer Genauigkeit von 1 % bezogen auf die jeweilig andere der Mehrzahl von Düsen (26) bei einem gegebenen Wasserdruck ausgibt.

5. Für eine wasserhaltige Batterie vorgesehenes Wässerungssystem (10) gemäß einem der Ansprüche 1 bis 3, wobei jede der Mehrzahl von Düsen (26) Wasser mit einer Fließrate innerhalb einer Genauigkeit von 2 % bezogen auf die jeweilig andere der Mehrzahl von Düsen (26) bei einem gegebenen Wasserdruck ausgibt.

6. Für eine wasserhaltige Batterie vorgesehenes Wässerungssystem (10) gemäß einem der Ansprüche 1 bis 3, wobei jede der Mehrzahl von Düsen (26) Wasser mit einer Fließrate innerhalb einer Genauigkeit von 5 % bezogen auf die jeweilig andere der Mehrzahl von Düsen (26) bei einem gegebenen Wasserdruck ausgibt.

7. Für eine wasserhaltige Batterie vorgesehenes Wässerungssystem (10) nach einem der Ansprüche 1 bis 6, wobei jede der Düsen (26) einen inneren Durchmesser, der nicht größer als 0,051 cm (0,02 Zoll) ist, besitzt.

8. Für eine wasserhaltige Batterie vorgesehenes Wässerungssystem (10) nach einem der Ansprüche 1 bis 6, wobei jede der Düsen (26) einen inneren Durchmesser, der nicht größer als 0,152 cm (0,06 Zoll) ist, besitzt.

9. Für eine wasserhaltige Batterie vorgesehenes Wässerungssystem (10) nach einem der Ansprüche 1 bis 6, wobei jede der Düsen (26) einen inneren Durchmesser, der nicht größer als 0,254 cm (0,1 Zoll) ist, besitzt.

10. Für eine wasserhaltige Batterie vorgesehenes Wässerungssystem (10) gemäß einem der Ansprüche 1 bis 9, welches ferner aufweist:
eine Elektrolyt-Füllstandskontrollvorrichtung (48), die innerhalb wenigstens einer der Mehrzahl von Batteriezellen (12) zum Kontrollieren des in dieser Zelle vorhandenen Elektrolyt-Füllstandes (20) positioniert ist;
eine Steuereinrichtung (50), die in Verbindung mit der Elektrolyt-Füllstandskontrollvorrichtung (48) ist, um ein Signal von dieser zu erhalten; und
ein automatisch betätigbares Ventil (46), das in Fließverbindung mit der Wasserleitung (24) ist und angeordnet ist, den Wasserfluss zu der Wasserleitung (24) zu steuern, wobei das Ventil in Verbindung mit der Steuereinrichtung (50) ist, um von dieser ein Signal zu erhalten.

11. Für eine wasserhaltige Batterie vorgesehenes Wässerungssystem (10) gemäß einem der Ansprüche 1 bis 9, welches ferner aufweist:
eine Elektrolyt-Füllstandskontrollvorrichtung (48), die innerhalb wenigstens einer der Mehrzahl von Batteriezellen (12) zum Kontrollieren des in dieser Zelle vorhandenen Elektrolyt-Füllstandes (20) positioniert ist;
eine Steuereinrichtung (50), die in Verbindung mit der Elektrolyt-Füllstandskontrollvorrichtung (48) ist, um ein Signal von dieser zu erhalten;
eine Pumpe (52), die verbunden ist mit und in Fließverbindung ist mit der Wasserleitung (24), so dass sie Wasser zu der Wasserleitung (24) an all die Düsen (26) liefert, wobei die Pumpe (52) in Verbindung mit der Steuereinrichtung (50) ist, um ein Signal von dieser zu erhalten, so dass die Pumpe (52) veranlasst wird, Wasser zu der Wasserleitung (24) zu liefern.

12. Für eine wasserhaltige Batterie vorgesehenes Wässerungssystem (10) gemäß einem der Ansprüche 1 bis 11, wobei jede der Zellen (12) Wasser von mehreren der Düsen (26) erhält.

13. Für eine wassserhaltige Batterie vorgesehenes Wässerungssystem (10) gemäß einem der Ansprüche 1 bis 12, wobei die Wasserleitung (24) einen Verteiler (24b) und eine Mehrzahl von Leitungen (56), die sich von dem Verteiler (24b) zu jeder der einzelnen Zellen erstrecken, aufweist.

14. Für eine wasserhaltige Batterie vorgesehenes Wässerungssystem (10) gemäß einem der Ansprüche 1 bis 13, wobei die Wasserleitung (24) eine innere Querschnittsfläche hat, die wenigstens zehn mal größer ist als die addierten Querschnittsflächen der Düsen (26), die mit ihr verbunden sind, um sicher zu stellen, dass der an die Düsen (26) gegebene Wasserdruck im Wesentlichen gleich ist.

15. Verfahren zum gleichzeitigen Wässern einer Mehrzahl von wasserhaltigen Batteriezellen (12), wobei das Verfahren aufweist:
(a) Liefern von Wasser an eine Mehrzahl von Düsen (26) unter einem im Wesentlichen selben Druck und zur selben Zeit, wobei die Düsen (26) konfiguriert sind, Wasserfluss durch sie hindurch zu beschränken und eine im Wesentlichen selbe Fließrate mit dem im Wesentlichen selben Druck auszugeben;
(b) Führen des Wassers durch jede der Düsen (26) hindurch;
(c) Ausgeben des Wassers von jeder der Düsen (26) zu der Mehrzahl von Batteriezellen (12), so dass alles Wasser, welches von jeder der Düsen (26) erhalten wird, ausgegeben wird, wobei jede der Düsen (26) mit einer der Zellen (12) so assoziiert ist, dass jede der Zellen (12) Wasser von der mit ihr assoziierten Düse (26) erhält; und
(d) Beenden des Lieferns von Wasser an all die Düsen (26), wenn die gewünschte Menge an Wasser den Zellen (12) so hinzugefügt worden ist, dass all die Zellen (12) im Wesentlichen dieselbe Menge an Wasser erhalten.

16. Verfahren zum gleichzeitigen Wässern einer Mehrzahl von wasserhaltigen Batteriezellen (12) gemäß Anspruch 15, wobei Schritt (c) ausgeführt wird durch Verwenden eines Elektrolyt-Füllstandsanzeigers (48), der konfiguriert ist, ein automatisches Ventil (46), das den Fluss von Wasser zu den Düsen (26) steuert, zu steuern.

17. Verfahren zum gleichzeitigen Wässern einer Mehrzahl von wasserhaltigen Batteriezellen (12) gemäß Anspruch 15, wobei Schritt (c) den Schritt aufweist, ein Signal an eine automatische Pumpe (52), die den Fluss von Wasser zu den Düsen (26) steuert, zu senden.

18. Verfahren zum gleichzeitigen Wässern einer Mehrzahl von wasserhaltigen Batteriezellen (12) gemäß einem der Ansprüche 15 bis 17, wobei jede der Düsen (26), die mit einer der Zellen (12) assoziiert sind, mehrere Düsen (26) aufweist.

19. Verfahren zum gleichzeitigen Wässern einer Mehrzahl von wasserhaltigen Batteriezellen (12) gemäß einem der Ansprüche 15 bis 18, wobei jede der Düsen (26) einen inneren Wasserdurchlass besitzt, der nicht größer ist als 0,025 cm (0,01 Zoll), um so als eine Flammensperre zu wirken.

20. Verfahren zum gleichzeitigen Wässern einer Mehrzahl von wasserhaltigen Batteriezellen (12) gemäß einem der Ansprüche 15 bis 18, wobei jede der mehreren Düsen (26) Wassser ausgibt mit einer Fließrate innerhalb einer Genauigkeit von 5 % bezogen auf die jeweilig andere der mehreren Düsen (26) bei einem gegebenen Wasserdruck, der an die besagte Düse (26) angelegt ist.

21. Verfahren zum gleichzeitigen Wässern einer Mehrzahl von wasserhaltigen Batteriezellen (12) gemäß einem der Ansprüche 15 bis 18, wobei jede der mehreren Düsen (26) Wassser ausgibt mit einer Fließrate innerhalb einer Genauigkeit von 2 % bezogen auf die jeweilig andere der mehreren Düsen (26) bei einem gegebenen Wasserdruck, der an die besagte Düse (26) angelegt ist.

22. Verfahren zum gleichzeitigen Wässern einer Mehrzahl von wasserhaltigen Batteriezellen (12) gemäß einem der Ansprüche 15 bis 18, wobei jede der mehreren Düsen (26) Wassser ausgibt mit einer Fließrate innerhalb einer Genauigkeit von 1 % bezogen auf die jeweilig andere der mehreren Düsen (26) bei einem gegebenen Wasserdruck, der an die besagte Düse (26) angelegt ist.

23. Verfahren zum gleichzeitigen Wässern einer Mehrzahl von wasserhaltigen Batteriezellen (12) gemäß einem der Ansprüche 15 bis 22, wobei Schritt (d) durchgeführt wird durch Verwenden eines Zeitgebers, um zu bestimmen, wann die gewünschte Menge an Wasser wenigstens einer der Zellen (12) zugegeben worden ist, wobei die Zufuhr von Wasser beendet wird, nachdem eine vorbestimmte Zeitspanne vergangen ist.

24. Verfahren zum gleichzeitigen Wässern einer Mehrzahl von wasserhaltigen Batteriezellen (12) gemäß einem der Ansprüche 15 bis 23, wobei Schritt (c) ein Abfühlen eines niedrigen Elektrolyt-Füllstandes in wenigstens einer der Zellen (12) einschließt.

25. Verfahren zum gleichzeitigen Wässern einer Mehrzahl von wasserhaltigen Batteriezellen (12) gemäß einem der Ansprüche 15 bis 24, wobei Schritt (c) ein Liefern des Flusses von Wasser durch die Düsen (26) in die Zellen (12) ohne Unterbrechung einschließt.

26. Verfahren zum gleichzeitigen Wässern einer Mehrzahl von wasserhaltigen Batteriezellen (12) gemäß einem der Ansprüche 15 bis 25, welches ferner aufweist:
(e) Wiederholen der Schritte (a) bis (d), wenn die Zellen (12) zusätzliches Wasser benötigen.

## Revendications

1. Système d'alimentation en eau pour batterie aqueuse (10), comprenant :
plusieurs cellules de batterie (12), chacune desdites cellules contenant un électrolyte aqueux liquide (16) ;
un conduit d'eau (24) pouvant être relié à une source d'alimentation d'eau (22) et à travers lequel l'eau (34) provenant de ladite source d'alimentation d'eau peut s'écouler pour être distribuée dans lesdites cellules de batterie (12) ;
des buses (26) attachées au dit conduit d'eau (24) et en communication fluidique avec celui-ci, chacune desdites buses (26) étant associée à l'une desdites cellules (12) de sorte que chacune desdites cellules (12) reçoive de l'eau en provenance de la buse qui lui est associée, chacune desdites buses (26) comportant une ouverture interne à travers laquelle l'eau provenant dudit conduit (24) peut s'écouler vers lesdites cellules (12), chacune desdites buses (26) étant configurée pour restreindre l'écoulement d'eau à travers celle-ci, et chacune desdites buses (26) étant disposée pour distribuer de l'eau dudit conduit d'eau (24) dans l'une desdites plusieurs cellules de batterie (12) ;
**caractérisé en ce que** ladite distribution est telle que chacune desdites buses (26) distribue sensiblement le même volume d'eau dans chaque cellule (12) au cours de chaque cycle de remplissage.

2. Système d'alimentation en eau pour batterie aqueuse (10) selon la revendication 1, dans lequel toutes lesdites buses (26) sont configurées pour fournir un débit d'eau sensiblement égal à travers celles-ci à une pression d'eau donnée.

3. Système d'alimentation en eau pour batterie aqueuse (10) selon la revendication 1 ou 2, dans lequel chacune desdites buses (26) est configurée pour distribuer de l'eau dudit conduit d'eau (24) dans l'une desdites plusieurs cellules de batterie (12) sans interruption.

4. Système d'alimentation en eau pour batterie aqueuse (10) selon l'une quelconque des revendications 1 à 3, dans lequel chacune desdites plusieurs buses (26) distribue de l'eau à un débit ne différant pas de plus de 1% de celui des autres desdites plusieurs buses (26) à une pression d'eau donnée.

5. Système d'alimentation en eau pour batterie aqueuse (10) selon l'une quelconque des revendications 1 à 3, dans lequel chacune desdites plusieurs buses (26) distribue de l'eau à un débit ne différant pas de plus de 2% de celui des autres desdites plusieurs buses (26) à une pression d'eau donnée.

6. Système d'alimentation en eau pour batterie aqueuse (10) selon l'une quelconque des revendications 1 à 3, dans lequel chacune desdites plusieurs buses (26) distribue de l'eau à un débit ne différant pas de plus de 5% de celui des autres desdites plusieurs buses (26) à une pression d'eau donnée.

7. Système d'alimentation en eau pour batterie aqueuse (10) selon l'une quelconque des revendications 1 à 6, dans lequel chacune desdites buses (26) a un diamètre interne ne dépassant pas 0,051 cm (0,02 pouce).

8. Système d'alimentation en eau pour batterie aqueuse (10) selon l'une quelconque des revendications 1 à 6, dans lequel chacune desdites buses (26) a un diamètre interne ne dépassant pas 0,152 cm (0,06 pouce).

9. Système d'alimentation en eau pour batterie aqueuse (10) selon l'une quelconque des revendications 1 à 6, dans lequel chacune desdites buses (26) a un diamètre interne ne dépassant pas 0,254 cm (0,1 pouce).

10. Système d'alimentation en eau pour batterie aqueuse (10) selon l'une quelconque des revendications 1 à 9, comprenant en outre :
un moniteur de niveau d'électrolyte (48) positionné à l'intérieur d'au moins l'une desdites plusieurs cellules de batterie (12) pour surveiller le niveau d'électrolyte (20) à l'intérieur de celle-ci ;
un organe de commande (50) en communication avec ledit moniteur de niveau d'électrolyte (48) pour recevoir un signal de celui-ci ; et
une vanne actionnable automatiquement (46) en communication fluidique avec ledit conduit d'eau (24) et disposée pour réguler l'écoulement d'eau vers ledit conduit d'eau (24), ladite vanne étant en communication avec ledit organe de commande (50) pour recevoir un signal de celui-ci.

11. Système d'alimentation en eau pour batterie aqueuse (10) selon l'une quelconque des revendications 1 à 9, comprenant en outre :
un moniteur de niveau d'électrolyte (48) positionné à l'intérieur d'au moins l'une desdites plusieurs cellules de batterie (12) pour surveiller le niveau d'électrolyte (20) à l'intérieur de celle-ci ;
un organe de commande (50) en communication avec ledit moniteur de niveau d'électrolyte (48) pour recevoir un signal de celui-ci ;
une pompe (52) reliée au dit conduit d'eau (24) avec lequel elle se trouve en communication fluidique afin de fournir de l'eau au dit conduit d'eau (24) à toutes lesdites buses (26), ladite pompe (52) étant en communication avec ledit organe de commande (50) pour recevoir un signal de celui-ci afin d'amener ladite pompe (52) à fournir de l'eau audit conduit d'eau (24).

12. Système d'alimentation en eau pour batterie aqueuse (10) selon l'une quelconque des revendications 1 à 11, dans lequel chacune desdites cellules (12) reçoit de l'eau de plusieurs desdites buses (26).

13. Système d'alimentation en eau pour batterie aqueuse (10) selon l'une quelconque des revendications 1 à 12, dans lequel ledit conduit d'eau (24) comprend un collecteur (24b) et plusieurs conduits (56) s'étendant dudit collecteur (24b) à chacune desdites cellules individuelles.

14. Système d'alimentation en eau pour batterie aqueuse (10) selon l'une quelconque des revendications 1 à 13, dans lequel ledit conduit d'eau (24) comporte une surface de coupe transversale intérieure au moins dix fois supérieure au cumul des surfaces de coupe transversale des buses (26) qui lui sont reliées pour assurer que la pression d'eau fournie auxdites buses (26) soit sensiblement égale.

15. Procédé d'alimentation simultanée en eau de plusieurs cellules de batterie aqueuse (12), ledit procédé comprenant :
(a) la fourniture d'eau à une pluralité de buses (26) sensiblement à la même pression et en même temps, lesdites buses (26) étant configurées pour restreindre l'écoulement d'eau à travers celles-ci et pour distribuer un débit sensiblement égal à ladite pression sensiblement identique ;
(b) le passage de l'eau à travers chacune desdites buses (26) ;
(c) la distribution de l'eau de chacune desdites buses (26) aux plusieurs cellules de batterie (12) de sorte que toute l'eau reçue par chacune desdites buses (26) soit distribuée, chacune desdites buses (26) étant associée à l'une desdites cellules (12) de sorte que chacune desdites cellules (12) reçoive de l'eau de la buse (26) qui lui est associée ; et
(d) la terminaison de ladite fourniture d'eau à toutes lesdites buses (26) lorsque la quantité souhaitée d'eau a été ajoutée auxdites cellules (12) de sorte que toutes lesdites cellules (12) reçoivent sensiblement la même quantité d'eau.

16. Procédé d'alimentation simultanée en eau de plusieurs cellules de batterie aqueuse (12) selon la revendication 15, dans lequel l'étape (c) est effectuée par l'utilisation d'un indicateur de niveau d'électrolyte (48) configuré pour commander une vanne automatique (46) qui régule l'écoulement d'eau vers lesdites buses (26).

17. Procédé d'alimentation simultanée en eau de plusieurs cellules de batterie aqueuse (12) selon la revendication 15, dans lequel l'étape (c) comprend l'étape de l'envoi d'un signal à une pompe automatique (52) qui régule l'écoulement d'eau vers lesdites buses (26).

18. Procédé d'alimentation simultanée en eau de plusieurs cellules de batterie aqueuse (12) selon l'une quelconque des revendications 15 à 17, dans lequel chacune desdites buses (26) associée à chacune desdites cellules (12) comprend plusieurs buses (26).

19. Procédé d'alimentation simultanée en eau de plusieurs cellules de batterie aqueuse (12) selon l'une quelconque des revendications 15 à 18, dans lequel chacune desdites buses (26) comporte un passage d'eau interne ne dépassant pas 0,025 cm (0,01 pouce) de manière à agir en tant que dispositif antiretour de flamme.

20. Procédé d'alimentation simultanée en eau de plusieurs cellules de batterie aqueuse (12) selon l'une quelconque des revendications 15 à 18, dans lequel chacune desdites plusieurs buses (26) distribue de l'eau à un débit ne différant pas de plus de 5 % de celui des autres desdites plusieurs buses (26) à une pression d'eau donnée fournie à ladite buse (26).

21. Procédé d'alimentation simultanée en eau de plusieurs cellules de batterie aqueuse (12) selon l'une quelconque des revendications 15 à 18, dans lequel chacune desdites plusieurs buses (26) distribue de l'eau à un débit ne différant pas de plus de 2 % de celui des autres desdites plusieurs buses (26) à une pression d'eau donnée fournie à ladite buse (26).

22. Procédé d'alimentation simultanée en eau de plusieurs cellules de batterie aqueuse (12) selon l'une quelconque des revendications 15 à 18, dans lequel chacune desdites plusieurs buses (26) distribue de l'eau à un débit ne différant pas de plus de 1% de celui des autres desdites plusieurs buses (26) à une pression d'eau donnée fournie à ladite buse (26).

23. Procédé d'alimentation simultanée en eau de plusieurs cellules de batterie aqueuse (12) selon l'une quelconque des revendications 15 à 22, dans lequel l'étape (d) est effectuée par l'utilisation d'une minuterie pour déterminer quand la quantité souhaitée d'eau a été ajoutée à au moins l'une desdites cellules (12), la fourniture d'eau étant terminée après qu'une quantité prédéterminée de temps s'est écoulée.

24. Procédé d'alimentation simultanée en eau de plusieurs cellules de batterie aqueuse (12) selon l'une quelconque des revendications 15 à 23, dans lequel l'étape (c) comprend la détection d'un bas niveau d'électrolyte dans au moins l'une desdites cellules (12).

25. Procédé d'alimentation simultanée en eau de plusieurs cellules de batterie aqueuse (12) selon l'une quelconque des revendications 15 à 24, dans lequel l'étape (c) comprend la fourniture dudit écoulement d'eau à travers lesdites buses (26) dans lesdites cellules (12) sans interruption.

26. Procédé d'alimentation simultanée en eau de plusieurs cellules de batterie aqueuse (12) selon l'une quelconque des revendications 15 à 25, comprenant en outre :
(e) la répétition des étapes (a) à (d) lorsque lesdites cellules (12) ont besoin de davantage d'eau.
